# EUROPÄISCHE PATENTANMELDUNG

(11) **EP 3 026 206 A1**
(43) Veröffentlichungstag der Anmeldung: **01.06.2016**
(21) Anmeldenummer: 15195435.1
(22) Anmeldetag: 19.11.2015
(51) Int. Cl.: E06B 9/15, F16P 3/02

(54) **GLIEDERSCHÜRZE, INSBESONDERE EINE GLIEDERSCHÜRZE ZUM SCHUTZ VON FÜHRUNGSBAHNEN MIT IN EINEM EINGRIFF STEHENDEN GELENKTEILEN**

(30) Priorität: 27.11.2014 DE 202014105735 U
(71) Anmelder: Kabelschlepp GmbH, 57482 Wenden-Hünsborn (DE)
(72) Erfinder: Serwotka, Janus, 51674 Wiehl (DE); Diebel, Michael, 35687 Dillenburg (DE)
(74) Vertreter: Neumann, Ditmar

(57) **Zusammenfassung**

Die Erfindung bezieht sich auf eine Gliederschürze (1), insbesondere zum Schutz von Führungsbahnen, umfassend mindestens zwei Glieder (2) und mindestens eine diese verbindende Gelenkverbindung (3), wobei jedes Glied (2) eine Oberseite (4), eine Unterseite (5), eine erste Stirnseite (6) und eine gegenüberliegende, zweite Stirnseite aufweist (7), und wobei die Gelenkverbindung (3) ein erstes Gelenkteil (8) und ein zweites Gelenkteil (9) aufweist, wobei das erste Gelenkteil (8) im Bereich der ersten Stirnseite (6) und das zweite Gelenkteil (9) im Bereich der zweiten Stirnseite (7) angeordnet ist, so dass das erste Gelenkteil (8) eines Gliedes (2) mit dem zweiten Gelenkteil (9) eines anderen Gliedes (2) im Eingriff steht. Die Gliederschürze zeichnet sich dadurch aus, dass das erste Gelenkteil (8) im Querschnitt eine rundförmige Nutaufnahme (10) ausbildet und eine Öffnung (11) im Bereich der ersten Stirnseite (6) aufweist, und das zweite Gelenkteil (9) eine rundförmige Feder (12) ausbildet, die im Querschnitt an die rundförmige Nutaufnahme (10) des ersten Gelenkteils (8) angepasst ist.

## Beschreibung

Die vorliegende Erfindung betrifft eine Gliederschürze, insbesondere eine Gliederschürze zum Schutz von Führungsbahnen, Antriebsaggregaten oder dergleichen bei Werkzeugmaschinen oder ähnlichem.

### Stand der Technik

Werkzeugmaschinen weisen im Regelfall bewegliche Werkzeuge und/oder Werkstücke auf, die auf Führungsbahnen beweglich sind. Um Verschmutzungen dieser Führungsbahnen zu vermeiden, ist es vorteilhaft, diese abzudecken. Ansonsten könnten die Führungsbahnen mit Staub, Spänen, Öl und/oder ähnlichem verschmutzt werden, was zu einer Beschädigung der Werkzeugmaschine führen kann. Eine Möglichkeit, eine solche Führungsbahn abzudecken, bildet eine Gliederschürze, die Lamellen aufweist, die jeweils durch einzelne biegsame Elemente miteinander verbunden sind. Eine solche Gliederschürze ist beispielsweise aus der EP 0 041 164 A1 bekannt. Diese Gliederschürze weist Lamellen auf, die durch innenliegende biegsame Elemente miteinander verbunden sind. Diese biegsamen Elemente sind aus Kunststoff ausgeführt und können mit der Zeit spröde werden oder undichte Stellen aufweisen. Zudem sind solche Gliederschürzen aufwändig herzustellen und im Falle einer nötigen Reparatur an der Führungsbahn aufwändig zu zerlegen und auszubauen.

Bei großen Werkzeugmaschinen mit langen und/oder breiten Führungsbahnen, weisen auch die Gliederschürzen eine große Oberfläche auf. Die Glieder dieser Gliederschürzen sind zum Einen durch das eigene hohe Strukturgewicht belastet und zum Anderen kommt es bei solch großen Gliederschürzen durchaus vor, dass Menschen auf die Gliederschürzen steigen oder über diese gehen.

### Aufgabenstellung

Hiervon ausgehend liegt der vorliegenden Erfindung die Aufgabe zugrunde, eine Gliederschürze anzugeben, die einfach herstellbar und im Wartungsfall leicht auftrennbar und wieder zusammenfügbar ist.

Die Aufgaben werden gelöst durch eine Gliederschürze mit den Merkmalen der jeweiligen unabhängigen Ansprüche. Die jeweiligen abhängigen Ansprüche sind auf vorteilhafte Ausgestaltungen gerichtet.

Die erfindungsgemäße Gliederschürze dient insbesondere zum Schutz von Führungsbahnen. Die Gliederschürze umfasst mindestens zwei Glieder und mindestens eine diese verbindende Gelenkverbindung, wobei jedes Glied eine Oberseite, eine Unterseite, eine erste Stirnseite und eine gegenüberliegende zweite Stirnseite aufweist, und wobei die Gelenkverbindung ein erstes Gelenkteil und ein zweites Gelenkteil aufweist, wobei das erste Gelenkteil im Bereich der ersten Stirnseite und das zweite Gelenkteil im Bereich der zweiten Stirnseite angeordnet ist, so dass das erste Gelenkteil eines Gliedes mit dem zweiten Gelenkteil eines anderen Gliedes im Eingriff steht, wobei das erste Gelenkteil im Querschnitt eine rundförmige Nutaufnahme ausbildet und eine Öffnung im Bereich der ersten Stirnseite aufweist, und das zweite Gelenkteil eine rundförmige Feder ausbildet, die im Querschnitt an die rundförmige Nutaufnahme des ersten Gelenkteils angepasst ist.

Im Bereich der Gelenkverbindung ist insbesondere eine zumindest teilweise bewegbare und/oder verschwenkbare und/oder verdrehbare Feder-NutVerbindung gebildet. Bevorzugt bildet das erste Gelenkteil im Querschnitt eine hakenförmige Aufnahme und weist eine Öffnung im Bereich der ersten Stirnseite auf. Weiter bevorzugt bildet das zweite Gelenkteil einen Haken, der im Querschnitt an die hakenförmige Aufnahme des ersten Gelenkteils angepasst ist.

Der Begriff der Oberseite wird hier so verstanden, dass die Oberseite der Teil des Gliedes ist, welcher von der abzudeckenden Führungsbahn oder Oberfläche weg weist, während die Unterseite im Wesentlichen entgegengesetzt zur Oberseite ausgereichtet ist und in Richtung der Führungsbahn oder der abzudeckenden Oberfläche weist. Bevorzugt ist die Oberseite mindestens eines Gliedes im Wesentlichen eben und/oder flach ausgeführt. Insbesondere ist die Oberseite als metallische Oberfläche ausgebildet.

Der Begriff der Stirnseite wird hier so verstanden, dass ein Glied eine erste und eine zweite Stirnseite aufweist, wobei die Stirnseiten im Wesentlichen senkrecht zur Laufrichtung der Gliederschürze ausgerichtet sind. Die Stirnseiten sind diejenigen Seiten, die in oder entgegen der Laufrichtung weisen und es sind die Seiten der Glieder, die insbesondere im verbundenen Zustand aneinander angrenzen. Bezogen auf ein Glied liegen sich die erste und zweite Stirnseite somit gegenüber, aber auch bezogen auf eine Verbindung zweier Glieder, ist eine erste Stirnseite eines Gliedes gegenüber einer zweiten Stirnseite eines anderen Gliedes angeordnet. Die Laufrichtung ist die Richtung, in welche die Gliederschürze sich im Betrieb bewegt.

Bevorzugt ist die Gliederschürze so ausgebildet, dass das erste Gelenkteil und das zweite Gelenkteil so relativ zueinander um eine Gelenkachse verschwenkbar sind, dass die Gelenkteile durch eine Schwenkbewegung um die Gelenkachse lösbar verbindbar sind. Insbesondere können die Glieder somit in einer Richtung voneinander gelöst werden, die im Wesentlichen parallel zu der Laufrichtung der Gliederschürze ausgerichtet ist. Bevorzugt erfolgt das Lösen und/oder das Verbinden zweier Glieder, ohne, dass diese Glieder, in einer Richtung senkrecht zur Laufrichtung der Gliederschürze, zueinander verschoben werden müssen. Die Glieder können mittels einer Schwenkbewegung voneinander gelöst und wieder miteinander verbunden werden, wobei die rundförmige Feder durch die Öffnung in die rundförmige Nutaufnahme hinein oder aus dieser heraus geführt wird, ohne dass die Glieder gegeneinander, entlang der Gliedlänge verschoben werden müssen. Hierzu ist insbesondere eine relative Schwenkbewegung zueinander von mindestens 90° [Grad] notwendig. Die Achse, um welche sich die Glieder zueinander verschwenken können, wird hier als Gelenkachse bezeichnet. Sie wird durch die Geometrie der Gelenkverbindung, umfassend das erste und das zweite Gelenkteil, definiert.

Die Glieder sind insbesondere erst ab einer vorgegebenen Schwenkbewegung voneinander lösbar, damit ein ungewolltes Auftrennen der Gliederschürze im Betrieb vermieden wird. Die Gliederschürze ist mit einem vorgegebenen Radius umlenkbar, so dass diese als Schutzabdeckung für unterschiedliche Anwendungen angepasst werden kann. Insbesondere kann die Gliederschürze mit einer entsprechenden Umlenkvorrichtung umgelenkt werden. Bevorzugt kann die Gliederschürze auch mit einer Aufwickelvorrichtung aufgewickelt werden. Hierzu können auch Abstreifer vorgesehen sein, die die Oberseiten der Glieder säubern, bevor oder während die Gliederschürze aufgewickelt wird. Besonders bevorzugt kann die Gliederschürze auch in unterschiedlichen Bewegungsrichtungen betrieben werden, insbesondere mittels einer Bewegungsvorrichtung, wie z.B. einer Spindel.

Die erfindungsgemäße Gliederschürze lässt insbesondere Verfahrgeschwindigkeiten von bis zu 3 m/s [Meter pro Sekunde] zu. Dies ist auch wegen der vorteilhaften, erhöhten Stabilität und dem geringen Gewicht der Gliederschürze möglich.

Die erfindungsgemäße Gliederschürze erlaubt in vorteilhafter Weise die Bereitstellung einer Abdeckung von Maschinenteilen, insbesondere zum Schutz von Führungsbahnen, die einfach aufbau- und herstellbar ist und bei der im Falle einer nötigen Reparatur oder von Wartungsarbeiten das Lösen zweier Abschnitte auf einfache Art und Weise erfolgen kann.

Die Verbindung der Glieder wird insbesondere durch eine Gelenkverbindung bereitgestellt, die bevorzugt aus Gelenkteilen gebildet ist, die an das Glied angeformt sind. Besonders bevorzugt sind das Glied und die Gelenkteile einstückig hergestellt. Ein solches Herstellungsverfahren kann z.B. ein Bereitstellen eines Grundmaterials, ein Formen oder Strangpressen und ein Zuschneiden oder Ablängen des somit geformten Profils auf eine gewünschte Spannweite oder Länge (hier Gliedlänge genannt) umfassen. Ein solches Grundmaterial kann zumindest ein Metall oder einen Kunststoff aufweisen, bevorzugt ist eine Legierung mit Metallen, die zumindest teilweise Aluminium umfasst.

Die erfindungsgemäße Gliederschürze erlaubt zudem in vorteilhafter Weise die Bereitstellung einer Verbindung der Glieder ohne ein zusätzliches Zwischenelement. Somit kann auf zusätzliche wartungsintensive Bauteile, wie z.B. elastische Verbindungsmittel in der Art eines Knochens oder in der Art einer Klammer verzichtet werden. Dies ist besonders vorteilhaft, weil damit die Anzahl unterschiedlicher Teile einer Gliederschürze reduziert wird. Somit kann die Gliederschürze z.B. im Wartungsfall deutlich einfacher auseinandergenommen und wieder zusammengesetzt werden und insgesamt günstiger hergestellt werden. Zudem werden Kunststoff-Verbindungsmittel vermieden, die mit der Zeit spröde werden oder undichte Stellen aufweisen können.

Mit der erfindungsgemäßen Gelenkverbindung, wird insbesondere eine sehr hohe Passgenauigkeit der Gelenkteile erreicht. Dies ist besonders Vorteilhaft für die Dichtheit der Gliederschürze.

Bevorzugt ist mindestens ein Winkelbegrenzer vorgesehen, der eine Schwenkbewegung zumindest teilweisen begrenzen kann. Ein Winkelbegrenzer kann durch die Formgebung des ersten Gelenkteils und/oder des zweiten Gelenkteils mindestens eines Gliedes gebildet sein. Es kann z.B. das zweite Gelenkteil derart an einen Halter angeformt sein, dass hierdurch ein Winkelbegrenzer gebildet ist. Der Winkelbegrenzer kann durch eine hierzu ausgebildete Krümmung des Übergangs zwischen dem zweiten Gelenkteil und dem Halter ausgeführt sein.

Bevorzugt sind das erste Gelenkteil und das zweite Gelenkteil im verbundenen Zustand zumindest teilweise formschlüssig miteinander verbunden. Das erste Gelenkteil bildet im Querschnitt eine rundförmige Nutaufnahme aus, die insbesondere die Form einer gekrümmten und/oder halbkreisförmigen Nut aufweist. Das zweite Gelenkteil ist in der Art einer rundförmigen Feder ausgebildet, die insbesondere die Form eines entsprechend gekrümmten Profils ausbildet. Die rundförmige Feder ist im Querschnitt an die rundförmige Nutaufnahmeangepasst, damit eine möglichst gleichförmige Gelenkbewegung um die Gelenkachse ermöglicht wird. Die rundförmige Feder kann sich in der rundförmigen Nutaufnahmebewegen, wobei die rundförmige Feder von der rundförmigen Nutaufnahme geführt ist. Insbesondere in der gestreckten Lage der Gliederschürze wird die rundförmige Feder im Querschnitt einen großen Teil der rundförmigen Nutaufnahme ausfüllen, bevorzugt mindestens 80% des Querschnitts der rundförmigen Nutaufnahme oder sogar mindestens 90%.

Es ist nicht zwingend erforderlich, dass sich die Gelenkteile über die gesamte Gliedlänge erstrecken. Bevorzugt erstrecken sich die Gelenkteile über mindestens 50% der Gliedlänge, insbesondere über mindestens 80% oder sogar über mindestens 99%. Insbesondere können die Gelenkteile entlang der Gliedlänge auch Unterbrechungen aufweisen.

Eine vorteilhafte Weiterbildung der Erfindung besteht darin, dass mindestens ein Halter an der Unterseite wenigstens eines Gliedes und von dieser weggerichtet angeordnet ist. Dies bedeutet auch, dass an der Unterseite von mindestens einem Glied mindestens eine Struktur ausgebildet ist, die sich von der Unterseite weg erstreckt und dazu geeignet und bestimmt ist, mindestens einen Gegenstand an der Unterseite zu fixieren.

Die erfindungsgemäße Gliederschürze erlaubt in vorteilhafter Weise, dass wenigstens ein Glied mindestens einen Halterzwischenraum an der Unterseite aufweist, der jeweils mit zwei Haltern begrenzt ist, die in einem Halter-Abstand zueinander und an der Unterseite und von dieser weggerichtet angeordnet sind, wobei sich die Halter im Wesentlichen parallel zu den Stirnseiten erstrecken. Die Halter erstrecken sich insbesondere entlang der Erstreckungsrichtung der Gliedlänge.

Die Halter weisen insbesondere einen Halter-Abstand von 10 mm bis 200 mm [Millimeter] auf und bevorzugt einen Halter-Abstand von 10 mm bis 50 mm [Millimeter]. Der Halter-Abstand ist auch so zu verstehen, dass durch den Abstand der Halter zueinander ein Raum gebildet ist, der geeignet ist mindestens ein Element aufzunehmen.

Bevorzugt weisen die Halter zueinander gerichtete Vorsprünge auf, die in einem Vorsprungs-Abstand zur Unterseite angeordnet sind und insbesondere den Halterzwischenraum zumindest teilweise begrenzen. Der Vorsprungs-Abstand ist insbesondere so zu verstehen, dass durch den Abstand der Vorsprünge von der Unterseite gewährleistet wird, dass zwischen den Vorsprüngen und der Unterseite ein Element gehalten werden kann. Die Vorsprünge weisen darüber hinaus einen Vorsprungs-Abstand von 1 mm bis 20 mm [Millimeter] auf und bevorzugt einen Vorsprungs-Abstand von 1,5 mm bis 5 mm [Millimeter].

Insbesondere sind die Halter und die daran angeformten Vorsprünge so ausgebildet, dass diese Klauenansätze ausbilden, die z.B. ein Element, welches im Halterzwischenraum angeordnet ist zumindest teilweise untergreifen und somit zumindest teilweise festlegen. Bevorzugt bilden diese Halter eine Art Nut entlang der Unterseite aus, die sich in Richtung der Gliedlänge erstreckt. Darüber hinaus müssen sich die Vorsprünge und/oder die Halter nicht über die gesamte Gliedlänge erstrecken. Bevorzugt erstrecken sich die Vorsprünge und/oder die Halter über mindestens 50% der Gliedlänge, insbesondere über mindestens 80% oder sogar über mindestens 99%. Insbesondere können die Halter und/oder die Vorsprünge entlang der Gliedlänge auch Unterbrechungen aufweisen.

Um die Querschnittsform der Glieder möglichst einfach zu halten, können erfindungsgemäß die Gelenkteile und die daran jeweils angrenzenden Halter bevorzugt aneinander angeformt und besonders bevorzug einstückig ausgebildet sein. Insbesondere ist das erste Gelenkteil an einen Halter angeformt und bevorzugt mit diesem einstückig ausgebildet.

Eine vorteilhafte Weiterbildung der Erfindung besteht auch darin, dass mindestens ein Verstärkungselement in dem Halterzwischenraum wenigstens eines Gliedes angeordnet ist. Ein Verstärkungselement kann nur in einem Glied einer Gliederschürze vorhanden sein oder es können Verstärkungselemente in beliebig vielen Gliedern vorhanden sein. Bevorzugt ist in jedem zweiten Glied einer Gliederschürze ein Verstärkungselement angeordnet und besonders bevorzugt ist in jedem Glied einer Gliederschürze ein Verstärkungselement angeordnet. Dies ist besonders vorteilhaft für die Stabilität der Gliederschürze. Es ist somit insbesondere möglich, Glieder mit einer größeren Spannweite, also einer größeren Gliedlänge bereitzustellen ohne einen signifikanten Stabilitätsverlust der (verstärkten) Gliederschürze hinnehmen zu müssen. Die Verstärkungselemente ermöglichen zum Beispiel auch, dass die Gliederschürze begehbar wird. Insbesondere können die Verstärkungselemente auch bezogen auf den jeweiligen Belastungsfall angeordnet werden. Sind z.B. bestimmte Zustände der Gliederschürze (ausgerollt, aufgerollt, halb aufgerollt) und damit in Zusammenhang stehende Hauptbelastungsstellen bekannt, so kann die Gliederschürze sehr effizient auch (nur) lokal verstärkt sein. Insbesondere ermöglicht dies eine gezielte (lokale) Verstärkung bei gleichwohl eingespartem Gewicht.

Das Verstärkungselement kann erfindungsgemäß nicht nur seitlich eingeschoben werden, sondern bevorzugt auch von unten in den Halterzwischenraum eingebracht werden. Das Verstärkungselement kann auch in der Art einer Klippverbindung von unten in den Halterzwischenraum eingeklippt werden, indem insbesondere das Verstärkungselement und/oder mindestens ein Halter zumindest teilweise elastisch oder gelenkig ausgeführt sind. Bevorzug liegt das Verstärkungselement zumindest teilweise an der Unterseite und den Vorsprüngen an. Das Verstärkungselement ist bevorzugt aus einem Metall und besonders bevorzugt aus einem geformten Stahlblech gebildet. Das Verstärkungselement kann jedoch auch aus einem weichelastischen Material, wie z.B. einem weichelastischen Metall und/oder einem Kunststoff gebildet sein. Insbesondere sind die Glieder auch nachrüstbar mit mindestens einem Verstärkungselement.

Im Querschnitt kann das Verstärkungselement eine beliebige Form aufweisen. Bevorzug ist das Verstärkungselement jedoch rechteckig ausgeführt und besonders bevorzugt an das Aufnahmevermögen des Halterzwischenraumes angepasst. Insbesondere können in einem Halterzwischenraum auch mehrere Verstärkungselemente angeordnet werden. Darüber hinaus ist es nicht zwingend erforderlich, dass sich das Verstärkungselement über die gesamte Gliedlänge erstreckt. Bevorzugt erstreckt sich das Verstärkungselement über mindestens 50% der Gliedlänge, insbesondere über mindestens 80% oder sogar über mindestens 99%.

Bevorzugt kann die Gliederschürze zumindest teilweise auf einer Hohlwelle aufgewickelt werden. Es ist jedoch nicht zwingend erforderlich, dass die Gliederschürze vollständig aufwickelbar ausgeführt ist. Die Gliederschürze kann zum Schutz von Führungsbahnen auch nur in einer Ebene geführt werden oder nur teilweise aufwickelbar ausgeführt sein. Daher ist es auch möglich, dass das Verstärkungselement im Querschnitt so ausgebildet ist, dass es aus dem Halterzwischenraum herausragt. Bevorzugt weist ein solches Verstärkungselement im Querschnitt eine V-Form auf.

Gemäß einer vorteilhaften Weiterbildung der erfindungsgemäßen Gliederschürze, weist die Gliederschürze zusätzlich mindestens zwei seitliche Führungsgleiter auf. Bevorzugt sind die Führungsleiter jeweils seitlich an mindestens einem Glied angeordnet. Weiter bevorzugt werden zwei seitliche Führungsgleiter jeweils für ein Glied verwendet. Die Verbindung zwischen einem Glied und einem seitlichen Führungsgleiter kann derart erfolgen, dass der seitliche Führungsgleiter einen Überstand aufweist, der seitlich in den Halterzwischenraum eingreifen kann. Darüber hinaus kann die Verbindung zwischen einem Glied und einem seitlichen Führungsgleiter auch so erfolgen, dass ein Verstärkungselement länger ausgeführt ist als die Gliedlänge und das Verstärkungselement das Glied daher überragt. Hierbei kann der seitliche Führungsgleiter eine Aussparung aufweisen. Bevorzugt kann der überstehende Teil des Verstärkungselementes in die Aussparung des seitlichen Führungsgleiters eingreifen und diesen halten. Die zuvor beschriebenen Verbindungen sind jedoch nicht zwingend erforderlich, die seitlichen Führungsgleiter können z.B. auch an das Glied angeklebt werden oder die seitlichen Führungsgleiter weisen vorstehende Elemente auf, die an das Querschnittsprofil der Glieder angepasst sind und die zumindest teilweise an der Oberseite eines jeweiligen Gliedes anliegen und somit eine Verbindung bereitstellen können.

Die seitlichen Führungsgleiter können einen direkten Kontakt zwischen den Gliedern und einer Hohlwelle, auf welche die Gliederschürze aufgewickelt werden kann, verhindern. Zudem kann ein direktes Aufliegen der Glieder an der Hohlwelle verhindert werden. Wird die Gliederschürze aufgewickelt, so können sich mehrere aufeinander liegende und gewickelte Lagen der Gliederschürze ausbilden. Hierbei können die seitlichen Führungsgleiter ein direktes Aufliegen der Glieder aufeinander verhindern. Es ist vorteilhaft, dass die Glieder, welche bevorzugt mit Aluminium und verstärkt ausgebildet sind, nicht direkt aufeinander aufliegen. Somit kann z.B. die Oberseite der Glieder vor Beschädigungen geschützt werden.

Die seitlichen Führungsgleiter können insbesondere einen direkten Kontakt zwischen einem Halter eines Gliedes und der Oberseite eines anderen Gliedes, z.B. beim Aufwickeln der Gliederschürze, verhindern. Beim Aufwickeln der Gliederschürze können insbesondere die Führungsgleiter in Kontakt gelangen und/oder aufeinander aufliegen. Es ist hierbei auch möglich, dass der untere Teil eines seitlichen Führungsgleiters in Kontakt mit der Oberseite eines Gliedes gelangt. Darüber hinaus können auch die Führungsgleiter jeweils mindestens einen Winkelbegrenzer aufweisen. Hierzu können die Führungsgleiter an ihren zueinander ausgerichteten Außenseiten derart abgeschrägt sein, dass durch eine Anlage dieser Außenseiten zweier Führungsgleiter die Schwenkbewegung zweier Glieder relativ zueinander begrenzt ist.

Gemäß einer vorteilhaften Ausgestaltung der erfindungsgemäßen Gliederschürze, umfasst diese mindestens ein erstes Glied und mindestens ein zweites Glied, wobei bei jedem ersten Glied mindestens ein Hinterschnitt an der ersten und der zweiten Stirnseite ausgebildet ist und bei jedem zweiten Glied mindestens ein entsprechendes Gegenstück an der ersten und der zweiten Stirnseite ausgebildet ist, wobei der mindestens eine Hinterschnitt und das mindestens eine Gegenstück oberhalb der Gelenkteile angeordnet sind, so dass der mindestens eine Hinterschnitt und das mindestens eine Gegenstück in einer gestreckten Lage der Gliederschürze in Eingriff gelangen und somit die Glieder eine zumindest teilweise geschlossenen Oberfläche ausbilden. Dies ist auch so zu verstehen, dass diese vorteilhafte Ausgestaltung der Erfindung zwei verschiede Arten von Gliedern umfasst, nämlich erste Glieder und zweite Glieder. Insbesondere weist hierbei die ersten Glieder (nur) Hinterschnitte und die zweiten Glieder (nur) Gegenstücke auf.

Gemäß einer weiteren vorteilhaften Ausgestaltung der erfindungsgemäßen Gliederschürze, umfasst diese mindestens zwei Glieder, wobei bei jedem Glied mindestens ein Hinterschnitt an der ersten oder zweiten Stirnseite ausgebildet ist und mindestens ein entsprechendes Gegenstück an der gegenüberliegenden (zweiten oder ersten) Stirnseiten ausgebildet ist, wobei der mindestens eine Hinterschnitt und das mindestens eine Gegenstück oberhalb der Gelenkteile angeordnet sind, so dass der mindestens eine Hinterschnitt und das mindestens eine Gegenstück in einer gestreckten Lage der Gliederschürze in Eingriff gelangen und somit die Glieder eine zumindest teilweise geschlossenen Oberfläche ausbilden. Insbesondere sind die Glieder dieser vorteilhaften Ausgestaltung der Erfindung gleichartig ausgeführt.

Bezogen auf beide zuvor beschriebenen, vorteilhaften Ausgestaltungen mit Hinterschnitten und Gegenstücken wird insbesondere in der gestreckten Lage der Gliederschürze eine geschlossene und zumindest teilweise ebene Oberfläche der Gliederschürze bereitgestellt. Dies ist besonders vorteilhaft für die Dichtheit der Gliederschürze. Das Eindringen von Verschmutzungen, z.B. Späne, Öl, Staub, in das Innere der Werkzeugmaschine und/oder in die Gelenkverbindungen der Gliederschürze kann somit zumindest teilweise vermieden werden. Es ist nicht zwingend erforderlich, dass sich die Hinterschnitte und/oder die Gegenstücke über die gesamte Gliedlänge erstrecken. Bevorzugt erstrecken sich die Hinterschnitte und/oder die Gegenstücke über mindestens 50% der Gliedlänge, insbesondere über mindestens 80% oder sogar über mindestens 99%. Insbesondere können die Hinterschnitte und/oder die Gegenstücke entlang der Gliedlänge auch Unterbrechungen aufweisen.

Gemäß einer weiteren vorteilhaften Ausgestaltung, weist das mindestens eine Gegenstück wenigstens eine Nase auf und der mindestens eine Hinterschnitt wenigstens eine entsprechende Nut auf, so dass die wenigstens eine Nase und die wenigstens eine Nut in der gestreckten Lage der Gliederschürze zumindest teilweise in Eingriff sind. Die Nase und die entsprechende Nut können jeweils so ausgebildet sein, dass diese im Eingriff miteinander eine formschlüssige Verbindung bilden. Dies ist besonders vorteilhaft, weil in der gestreckten Lage der Gliederschürze eine (zusätzliche) Verriegelung der Glieder in der Laufrichtung und/oder senkrecht zur Laufrichtung der Gliederschürze bereitgestellt wird.

Bevorzugt ist die Nase mit dem Gegenstück verbunden, besonders bevorzugt sind die Nase und das Gegenstück einstückig gebildet. Es ist nicht zwingend erforderlich, dass sich die wenigstens eine Nase und/oder die wenigstens eine Nut über die gesamte Gliedlänge erstrecken. Bevorzugt erstrecken sich die Nase und/oder die Nut jeweils über mindestens 50% der Gliedlänge, insbesondere über mindestens 80% oder sogar über mindestens 99%. Insbesondere können die wenigstens eine Nase und/oder die wenigstens eine Nut entlang der Gliedlänge auch Unterbrechungen aufweisen. Es ist jedoch zu berücksichtigen, dass für jede Nase auch eine entsprechende Nut gebildet sein sollte, weil sonst die Nase den Eingriff von Gegenstück und Hinterschnitt behindern würde.

Gemäß einem weiteren Aspekt der vorliegenden Erfindung wird auch eine Gliederschürze, umfassend mindestens ein erstes Glied und mindestens ein zweites Glied und mindestens eine diese verbindende Gelenkverbindung vorgeschlagen, wobei jedes Glied eine Oberseite, eine Unterseite und sich gegenüberliegende Stirnseiten aufweist, und wobei die Gelenkverbindung ein erstes Gelenkteil und ein zweites Gelenkteil aufweist, wobei jedes erste Glied jeweils das erste Gelenkteil im Bereich der jeweiligen Stirnseite und jedes zweite Glied jeweils das zweite Gelenkteil im Bereich der jeweiligen Stirnseite aufweist, so dass das erste Gelenkteil des ersten Gliedes mit dem zweiten Gelenkteil des zweiten Gliedes im Eingriff steht. Bevorzugt sind das erste und das zweite Gelenkteil an sich so ausgeführt, wie dies in den zuvor genannten Ausführungsformen der Erfindung beschrieben ist. Das erste Gelenkteil bildet im Querschnitt eine rundförmige Nutaufnahme aus und weist eine Öffnung im Bereich der jeweiligen Stirnseite auf, und das zweite Gelenkteil bildet eine rundförmige Feder aus, die im Querschnitt an die rundförmige Nutaufnahme des ersten Gelenkteils angepasst ist.

Diese zweite Ausführungsform der Erfindung unterscheidet sich dadurch, dass die Gliederschürze nicht aus einer Sorte Glieder gebildet ist, sondern aus zwei Sorten Gliedern, wobei jedes erste Glied das erste Gelenkteil an beiden Stirnseiten aufweist und jedes zweite Glied das zweite Gelenkteil an beiden Stirnseiten aufweist.

Die für die erste Ausführungsform der Erfindung geschilderten Vorteile und besonderen Merkmale sind in analoger Weise auf die hier beschriebene zweite Ausführungsform der Erfindung übertragbar. Insbesondere kann auch diese zweite Ausführungsform in analoger Weise zur ersten Ausführungsform weitergebildet werden.

### Ausführungsbeispiel

Im Folgenden wird die Erfindung an Hand der beigefügten Zeichnungen näher erläutert, ohne dass die Erfindung auf die dort gezeigten Ausführungsbeispiele beschränkt wäre. Es zeigen:
- Fig. 1:: schematisch ein Glied einer erfindungsgemäßen Gliederschürze im Querschnitt.
- Fig. 2:: schematisch ein erstes Ausführungsbeispiel einer erfindungsgemäßen Gliederschürze im Querschnitt.
- Fig. 3:: schematisch eine Gliederschürze im Querschnitt und in teilweise aufgewickeltem Zustand.
- Fig. 4:: schematisch eine Gliederschürze in perspektivischer Ansicht und in teilweise aufgewickeltem Zustand.
- Fig. 5:: schematisch eine Gliederschürze in perspektivischer Ansicht und mit Verstärkungselementen.
- Fig. 6:: schematisch eine erfindungsgemäße Gliederschürze im Querschnitt und einen Entkoppel-Vorgang.
- Fig. 7:: schematisch ein Gegenstück mit einer Nase und einen Hinterschnitt mit einer Nut.
- Fig. 8:: schematisch ein weiteres Gegenstück mit einer Nase und einen weiteren Hinterschnitt mit einer Nut.

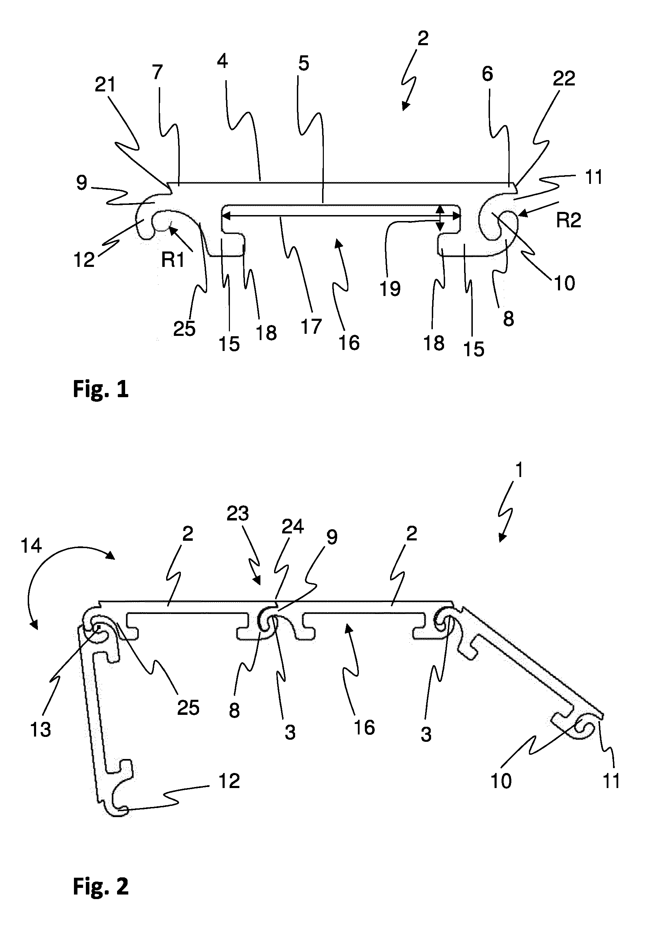

Fig. 1 zeigt im Querschnitt ein Glied 2 einer erfindungsgemäßen Gliederschürze 1. Das Glied 2 weist eine Oberseite 4, eine Unterseite 5, eine erste Stirnseite 6 und eine gegenüberliegende, zweite Stirnseite 7 auf. Die Oberseite 4 ist dabei so definiert, dass diese im eingebauten Zustand nach außen weist. Bevorzugt ist die Oberseite 4 im Wesentlichen flach und/oder eben ausgebildet. Die Stirnseiten 6, 7 liegen einander gegenüber und sind im Wesentlichen parallel zueinander. Das Glied 2 weist ein erstes Gelenkteil 8 und ein zweites Gelenkteil 9 auf. Das erste Gelenkteil 8 ist im Bereich der ersten Stirnseite 6 angeordnet und im Querschnitt in der Form einer rundförmigen Nutaufnahme 10 ausgebildet. Zudem weist das erste Gelenkteil 8 eine Öffnung 11 an der ersten Stirnseite 6 auf. Durch die Öffnung 11 kann ein zweites Gelenkteil 9 in die rundförmige Nutaufnahme 10 eingeführt werden. Das zweite Gelenkteil 9 ist im Querschnitt in der Form einer rundförmigen Feder 12 ausgebildet, die an die Form der rundförmigen Nutaufnahme10 des ersten Gelenkteils 8 angepasst ist. Die rundförmige Feder 12 weist insbesondere eine Krümmung auf, welche einen Innenradius R1 ausbildet. Dieser Innenradius R1 der rundförmigen Feder 12 ist an den Außenradius R2 der rundförmigen Nutaufnahme 10 angepasst. Dieser Außenradius R2 ist am hervorstehenden Teil der rundförmigen Nutaufnahme10 ausgebildet. Bevorzugt sind der Innenradius R1 und der Außenradius R2 im Wesentlichen gleich, Abweichungen können z.B. durch Fertigungstoleranzen entstehen. Der Innenradius R1 und der Außenradius R2 liegen insbesondere im Bereich von 0,5 mm bis 15 mm [Millimeter], bevorzugt im Bereich von 0,8 mm bis 5 mm [Millimeter] und besonders bevorzugt bei 0,9 mm [Millimeter].

Darüber hinaus zeigt Fig. 1 einen Halterzwischenraum 16, an der Unterseite 5 des Gliedes 2. Der Halterzwischenraum 16 ist mit zwei Haltern 15 begrenzt, die in einem Halter-Abstand 17 zueinander angeordnet sind und sich im Wesentlichen parallel zu den Stirnseiten 6, 7, entlang der Gliedlänge 27 (hier in die Zeichenebene hinein) erstrecken. Die Halter 15 weisen zueinander gerichtete Vorsprünge 18 auf, die in einem Vorsprungs-Abstand 19 zur Unterseite 5 angeordnet sind. Somit begrenzen auch die Vorsprünge 18 zumindest teilweise den Halterzwischenraum 16.

Die Halter 15 weisen insbesondere einen Halter-Abstand 17 von 10 mm bis 200 mm [Millimeter] auf und bevorzugt einen Halter-Abstand 17 von 15 mm bis 50 mm [Millimeter]. Die Vorsprünge 18 weisen darüber hinaus einen Vorsprungs-Abstand von 1 mm bis 20 mm [Millimeter] auf und bevorzugt einen Vorsprungs-Abstand von 1,5 mm bis 5 mm [Millimeter].

Das Glied 2 weist einen Hinterschnitt 21 an der zweiten Stirnseite 7 und ein dem Hinterschnitt 21 entsprechendes Gegenstück 22 an der ersten Stirnseite 6 auf. Um die Querschnittsform des Gliedes 2 möglichst einfach zu halten, können erfindungsgemäß die Gelenkteile 8, 9 und die daran jeweils angrenzenden Halter 15 bevorzugt aneinander angeformt und besonders bevorzug einstückig ausgebildet sein. Es ist in Fig. 1 zu erkennen, dass der linke Halter 15 einen gebogenen Übergang hin zum zweiten Gelenkteil 9 ausbildet. Dieser Übergang kann auch als Winkelbegrenzer 25 ausgeführt sein. Zudem ist in Fig. 2 zu erkennen, dass der rechte Halter 15 an das erste Gelenkteil 8 angeformt ist.

Fig. 2 zeigt im Querschnitt eine Gliederschürze 1, insbesondere zum Schutz von Führungsbahnen, umfassend vier Glieder 2 und drei Gelenkverbindungen 3, die jeweils zwei benachbarte Glieder 2 lösbar verbinden. Jede Gelenkverbindung 3 weist ein erstes Gelenkteil 8 und ein zweites Gelenkteil 9 auf. Insbesondere ist die mit den Gelenkteilen 8, 9 ausgebildete Gelenkverbindung 3 zumindest teilweise formschlüssig ausgeführt. Das erste Gelenkteil 8 ist im Bereich der ersten Stirnseite 6 angeordnet und im Querschnitt in der Form einer rundförmigen Nutaufnahme 10 ausgebildet. Zudem weist das erste Gelenkteil 8 eine Öffnung 11 an der ersten Stirnseite 6 auf. Durch die Öffnung 11 kann ein zweites Gelenkteil 9 in die rundförmige Nutaufnahme 10 eingeführt werden. Das zweite Gelenkteil 9 ist im Querschnitt in der Form einer rundförmigen Feder 12 ausgebildet, die an die Form der rundförmigen Nutaufnahme 10 des ersten Gelenkteils 8 angepasst ist. Die rundförmige Feder 12 weist insbesondere eine Krümmung auf, welche sich derart an der rundförmigen Nutaufnahme 10 orientiert, dass die Gelenkverbindung 3 eine relative Schwenkbewegung 14 der Glieder 2 zueinander und um eine Gelenkachse 13 zulässt. Insbesondere sind zwei benachbarte Glieder 2 gegeneinander verschwenkbar, wobei die Gelenkachse 13 die Schwenkachse darstellt und die Gelenkachse 13 insbesondere durch die Querschnittsform der Gelenkverbindung 3 definiert ist. In Fig. 2 weist die Gelenkachse 13 in die Zeichenebene hinein und ist hier mit dem Drehpunkt 13 dargestellt.

Bevorzugt sind die Glieder aus einem Kunststoff oder einem Metall ausgebildet oder weisen insbesondere zumindest eine metallische Oberfläche 4 auf. Es ist grundsätzlich auch möglich, dass die Glieder 2 einer Gliederschürze 1 aus unterschiedlichen Materialien gebildet sind. Die Wahl des jeweiligen Werkstoffs kann dabei in Abhängigkeit von den Einsatzbedingungen, insbesondere in Bezug auf Temperatur und/oder eine korrodierende Atmosphäre gewählt werden.

Insbesondere bedarf es bei der erfindungsgemäßen Gliederschürze keiner weiteren Verbindungsmittel, welche zwischen den Gliedern angeordnet sind. Die Verbindung zwischen zwei Gliedern 2 wird bevorzugt ausschließlich durch die Gelenkverbindung 3 bereitgestellt. Darüber hinaus weist bevorzugt jedes Glied 2 einen Halterzwischenraum 16 an der Unterseite 5 auf.

Zudem zeigt Fig. 2, dass eine Schwenkbewegung 14 der Glieder 2 relativ zueinander, dazu führen kann, dass die Glieder 2 lösbar verbindbar sind. Insbesondere, wenn die Glieder 2 mehr als 90° [Grad] relativ zueinander verschwenkt sind, was in Fig. 2 an der links dargestellten Gelenkverbindung 3 zu erkennen ist. Die rundförmige Feder 12 greift hier nur noch in den oberen Bereich der rundförmigen Nutaufnahme 10 ein und kann durch die Öffnung 11 aus der rundförmigen Nutaufnahme 10 herausgeführt werden. Somit kann die Gelenkverbindung 3 gelöst werden, ohne die Glieder 2 in einer zusätzlichen Bewegungsrichtung entlang der Gliedlänge 27 relativ zueinander verschieben zu müssen. Die Glieder 2 sind nach dem gleichen Prinzip auch verbindbar. In der Fig. 2 ist an der links dargestellten Gelenkverbindung 3 auch ein Winkelbegrenzer 25 zu erkennen. Ein Winkelbegrenzer 25 kann durch einen Übergang zwischen Halter 15 und zweitem Gelenkteil 9 gebildet sein und eine Schwenkbewegung 14 über einen vorgegebenen Maximal-Schwenkwinkel hinaus begrenzen. Ein vorgegebener Maximal-Schwenkwinkel kann im Bereich von 45° bis 180° [Grad] liegen. Bevorzugt ist ein vorgegebener Maximal-Schwenkwinkel von 90° bis 120° [Grad]. Ein Maximal-Schwenkwinkel kann insbesondere durch die Auslegung der Krümmung im Bereich des Winkelbegrenzers 25 vorgegeben werden.

Darüber hinaus zeigt Fig. 2 an der mittleren Gelenkverbindung 3 einen Abschnitt einer Gliederschürze 1 in gestreckter Lage 23. In der gestreckten Lage 23 gelangen die Hinterschnitte 21 und die Gegenstücke 22 in Eingriff. Somit entsteht eine zumindest teilweise geschlossene Oberfläche 24 der Gliederschürze 1. Dies ist besonders vorteilhaft, weil durch die geschlossenen Oberfläche 24 vermieden werden kann, dass Verunreinigungen, z.B. Späne, Staub oder Öl, in die Gelenkverbindungen 3 oder in Bereiche zwischen den Gliedern 2 gelangen und sich darin verklemmen und eine Beschädigung der Gliederschürze 1 oder der Führungsbahn verursachen können. Die geschlossene Oberfläche 24 hat darüber hinaus den Vorteil, dass die Gliederschürze 1 eine hohe Dichtheit aufweist.

Die in Fig.1 und Fig. 2 dargestellten Glieder 2 weisen alle einen Hinterschnitt 21 an der zweiten Stirnseite 7 und ein dem Hinterschnitt 21 entsprechendes Gegenstück 22 an der ersten Stirnseite 6 auf. Sowohl die Hinterschnitte 21 als auch die Gegenstücke 22 sind oberhalb der Gelenkteile 8, 9 angeordnet.

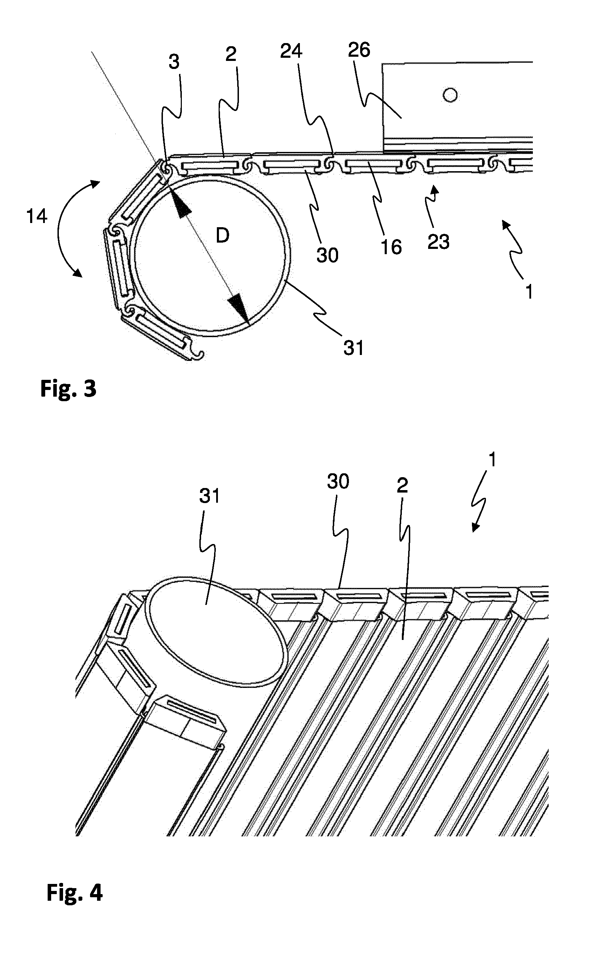

Fig. 3 zeigt im Querschnitt eine Gliederschürze 1, insbesondere zum Schutz von Führungsbahnen, umfassend mindestens zwei Glieder 2 und mindestens eine diese verbindende Gelenkverbindung 3, die jeweils zwei benachbarte Glieder 2 lösbar verbindet. Bevorzugt weist jedes Glied 2 einen Halterzwischenraum 16 auf. Fig. 3 zeigt auf der rechten Seite einen Abschnitt der Gliederschürze 1 in gestreckter Lage 23, wodurch eine geschlossene Oberfläche 24 ausgebildet ist. Ein Abstreifer 26 kann oberhalb der Gliederschürze 1 angeordnet sein. Der Abstreifer 26 kontaktiert insbesondere die Oberfläche 4 mindestens eines Gliedes 2. Bevorzugt kontaktiert der Abstreifer 26 die Oberfläche 4 mindestens eines Gliedes 2 im Bereich einer geschlossenen Oberfläche 24 der Gliederschürze 1.

Fig. 3 zeigt auf der linken Seite einen zumindest teilweise aufgewickelten Abschnitt der Gliederschürze 1. Die Gliederschürze 1 kann auf eine Hohlwelle 31 aufgewickelt werden. Die Hohlwelle 31 weist einen äußeren Durchmesser D auf. Der Durchmesser D beeinflusst hier auch die Schwenkbewegung 14, welche zwei Glieder 2 relativ zueinander und während des Aufwickel-Vorgangs ausführen. Je weiter die Gliederschürze 1 aufgewickelt wird und je mehr Lagen sich bei der Wicklung bilden, desto geringer wird die hierzu notwendige Schwenkbewegung 14.

Die Glieder 2 der Gliederschürze 1 sind hier mit seitlichen Führungsgleitern 30 versehen. Die Führungsgleiter 30 können einen Kontakt zwischen den Gliedern 2 und der Hohlwelle 31 und ein direktes Aufliegen der Glieder 2 an der Hohlwelle 31 verhindern. Wird die Gliederschürze 1 weiter aufgewickelt, so bilden sich mehrere aufeinander liegende und gewickelte Lagen der Gliederschürze 1 aus. Hierbei verhindern die seitlichen Führungsgleiter 30 insbesondere ein direktes Aufliegen der Glieder 2 aufeinander. Es ist vorteilhaft, dass die Glieder 2, welche bevorzugt mit Aluminium ausgebildet sind, nicht direkt aufeinander aufliegen. Somit kann z.B. die Oberseite 4 der Glieder 2 vor Beschädigungen geschützt werden.

Fig. 4 zeigt schematisch eine Gliederschürze 1 in perspektivischer Ansicht. Die Gliederschürze 1 ist hier, wie auch bereits in Fig. 3 zu erkennen, auf der linken Seite der Fig. 4 zumindest teilweise auf eine Hohlwelle 31 aufgewickelt. Auf der rechten Seite der Fig. 4 ist die Gliederschürze 1 in gestreckter Lage 23 und in einer Ansicht von unten gezeigt. Es sind auch hier seitliche Führungsgleiter 30 zu erkennen. Die Führungsgleiter 30 sind seitlich an den Gliedern 2 angeordnet.

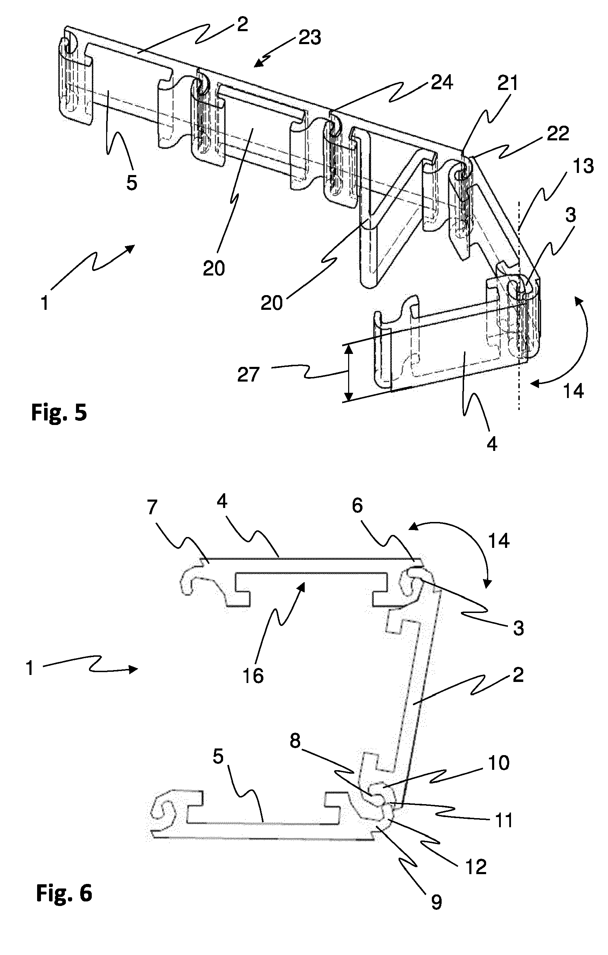

Fig. 5 zeigt schematisch eine Gliederschürze 1 mit fünf Gliedern 2 in perspektivischer Ansicht. Auf der linken Seite der Fig. 5 ist eine Schwenkbewegung 14 zweier Glieder 2 relativ zueinander dargestellt. Die Glieder 2 weisen bevorzug eine ebene Oberseite 4 auf. Insbesondere sind zwei benachbarte Glieder 2 gegeneinander verschwenkbar, wobei die Gelenkachse 13 die Schwenkachse darstellt und die Gelenkachse 13 insbesondere durch die Querschnittsform der Gelenkverbindung 3 definiert ist.

In mindestens einen Halterzwischenraum 16 kann ein Verstärkungselement 20 eingebracht werden. Ein Verstärkungselement 20 kann z.B. nur in einem Glied 2 einer Gliederschürze 1 vorhanden sein oder es können Verstärkungselemente 20 in beliebig vielen Gliedern vorhanden sein. Bevorzugt ist in jedem zweiten Glied 2 einer Gliederschürze 1 ein Verstärkungselement 20 angeordnet und besonders bevorzugt ist in jedem Glied 2 einer Gliederschürze 1 ein Verstärkungselement 20 angeordnet. Zudem ist es nicht zwingend erforderlich, dass die Verstärkungselemente 20 gleich ausgeführt sind, es können Verstärkungselemente 20 mit verschiedenen Querschnitten verwendet werden, diese können an lokale Beanspruchungen angepasst sein. Die Verstärkungselemente 20 ermöglichen zum Beispiel, dass die Gliederschürze begehbar wird. Das Verstärkungselement 20 kann erfindungsgemäß nicht nur von der Seite eingeschoben werden, sondern bevorzugt auch von unten in den Halterzwischenraum 16 eingebracht werden. Bevorzug liegt das Verstärkungselement 20 zumindest teilweise an der Unterseite 5 und den Vorsprüngen 18 an. Das Verstärkungselement 20 ist bevorzugt aus einem Metall gebildet. Das Verstärkungselement 20 kann jedoch auch aus einem weichelastischen Material, wie z.B. einem weichelastischen Metall und/oder einem Kunststoff gebildet sein.

Es ist nicht zwingend erforderlich, dass die Gliederschürze 1 vollständig aufwickelbar ausgeführt ist. Die Gliederschürze 1 kann zum Schutz von Führungsbahnen auch nur in einer Ebene geführt werden oder nur teilweise aufwickelbar ausgeführt sein. Daher ist es auch möglich, dass das Verstärkungselement 20 im Querschnitt so ausgebildet ist, dass es aus dem Halterzwischenraum 16 herausragt. Bevorzugt weist ein solches Verstärkungselement 20 im Querschnitt eine V-Form auf. Wenn dieses Verstärkungselement 20 elastisch ausgeführt ist, kann die V-Form dazu genutzt werden, das Verstärkungselement 20 kurzzeitig zusammenzudrücken und von unten in den Halterzwischenraum 16 einzubringen.

Fig. 5 zeigt zudem in perspektivischer Ansicht, dass die Glieder 2 jeweils mit einem Hinterschnitt 21 an der zweiten Stirnseite 7 ausgebildet sind und ein entsprechendes Gegenstück 22 an der gegenüberliegenden ersten Stirnseite 6 ausgebildet ist. Der Hinterschnitt 21 und das Gegenstück 22 sind jeweils oberhalb der Gelenkteile 8, 9 angeordnet. Es ist weiter auf der rechten Seite der Fig. 5 gezeigt, dass der Hinterschnitt 21 und das Gegenstück 22 in einer gestreckten Lage 23 der Gliederschürze 1 jeweils in Eingriff gelangen und somit die Glieder 2 eine zumindest teilweise geschlossenen Oberfläche 24 ausbilden.

Wie die perspektivische Ansicht der Fig. 5 weiter zeigt, weisen die Glieder eine Gliedlänge 27 auf, die im Wesentlichen die Gliederschürzenbreite 28 bestimmen kann. Werden zusätzlich seitliche Führungsgleiter 30 verwendet, so kann sich die Gliederschürzenbreite auch aus der Summe von Gliedlänge 27 und Längsausbreitung der seitlichen Führungsgleiter 30 zusammensetzen.

Die Glieder 2 können insbesondere in Form sog. extrudierter Profile hergestellt sein. Bevorzugt handelt es sich um extrudierte Aluminium Profile, es können jedoch auch extrudierte Kunststoffprofile verwendet werden. Die Gliedlänge 27 wird insbesondere durch ein sog. Ablängen der extrudierten Profile bestimmt. Die Gliederschürzenlänge 29 wird insbesondere und im Wesentlichen durch die Anzahl der verwendeten Glieder 2 bestimmt. Die Querschnitte der Glieder 2 sind in Fig. 5 entlang der Gliedlänge 27 konstant dargestellt, dies ist jedoch nicht zwingend erforderlich. Insbesondere im Bereich der Halter 15 müssen die Querschnitte der Glieder 2 nicht konstant sein. Hier kann insbesondere durch Unterbrechungen im Bereich der Halter 15, wodurch mehrteilige Halter 15 entstehen können, das Gewicht der Glieder 2 reduziert werden.

Fig. 6 zeigt eine Gliederschürze 1 im Querschnitt mit drei Gliedern 2 und zwei Gelenkverbindungen 3, die jeweils zwei benachbarte Glieder 2 lösbar verbinden. Zudem zeigt Fig. 6 einen Entkoppel-Vorgang der Gliederschürze 1. Jedes Glied 2 weist eine Oberseite 4, eine Unterseite 5, eine erste Stirnseite 6 und eine gegenüberliegende, zweite Stirnseite 7 auf. Darüber hinaus zeigt Fig. 6 einen Halterzwischenraum 16, an der Unterseite 5 jedes Gliedes 2. Jede Gelenkverbindung 3 weist ein erstes Gelenkteil 8 und ein zweites Gelenkteil 9 auf. Das erste Gelenkteil 8 ist im Bereich der ersten Stirnseite 6 angeordnet und im Querschnitt in der Form einer rundförmigen Nutaufnahme 10 ausgebildet. Zudem weist das erste Gelenkteil 8 eine Öffnung 11 an der ersten Stirnseite 6 auf. Durch die Öffnung 11 kann ein zweites Gelenkteil 9 in die rundförmige Nutaufnahme 10 eingeführt werden. Das zweite Gelenkteil 9 ist im Querschnitt in der Form einer rundförmigen Feder 12 ausgebildet, die an die Form der rundförmigen Nutaufnahme 10 des ersten Gelenkteils 8 angepasst ist.

Zudem zeigt Fig. 6 auch eine Schwenkbewegung 14 jeweils zweier Glieder 2 relativ zueinander, wobei diese Schwenkbewegung 14 dazu genutzt werden kann, die Glieder 2 miteinander zu verbinden oder voneinander zu lösen, ohne dass die Glieder 2 in einer Richtung parallel zu den Stirnseiten 6, 7 relativ zueinander verschoben werden müssen. Wenn die Glieder 2 mehr als 90° [Grad] relativ zueinander verschwenkt werden, was in Fig. 6 an der oberen Gelenkverbindung 3 zu erkennen ist, kann ein Entkoppeln erfolgen. Die rundförmige Feder 12 greift hier nur noch in den oberen Bereich der rundförmigen Nutaufnahme 10 ein und kann, wie dies an der unteren Gelenkverbindung 3 der Fig. 6 zu erkennen ist, durch die Öffnung 11 aus der rundförmigen Nutaufnahme 10 herausgeführt werden. Somit kann die Gelenkverbindung 3 gelöst werden, ohne die Glieder 2 in einer zusätzlichen Bewegungsrichtung entlang der Gliedlänge 27 relativ zueinander verschieben zu müssen. Die Glieder 2 sind nach dem gleichen Prinzip auch verbindbar. Somit ist eine relativ einfache Montage und Demontage der Gliederschürze 1 möglich und es werden spätere Wartungsarbeiten erleichtert.

Es ist zu erkennen, dass die vorliegende Erfindung eine Gliederschürze 1 angibt, die einfach herstellbar und im Wartungsfall leicht auftrennbar und wieder zusammenfügbar ist.

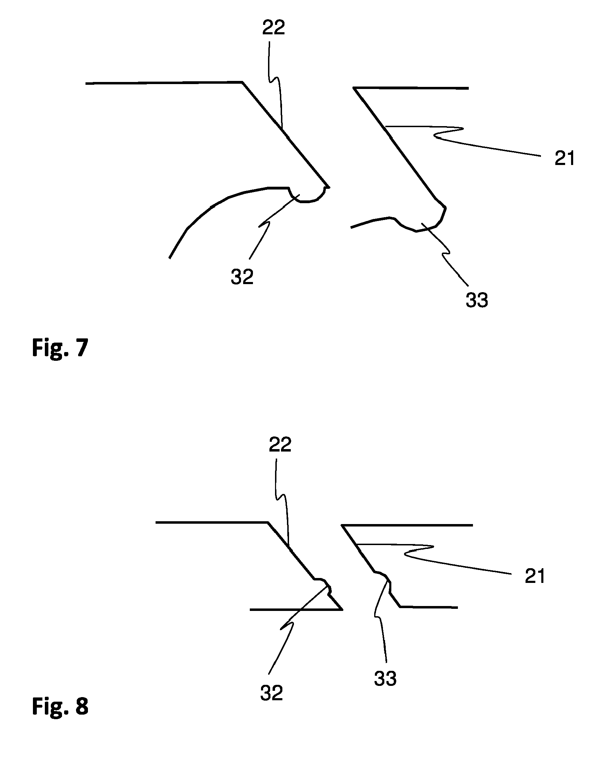

Fig. 7 zeigt schematisch und im Querschnitt ein Gegenstück 22 mit einer Nase 32 und einen Hinterschnitt 21 mit einer Nut 33. Die Nut 33 ist entsprechend der Nase 32 gestaltet. Die Nase 32 ist beispielhaft rund gestaltet. Die Nase 32 und die Nut 33 können in der gestreckten Lage 23 der Gliederschürze 1 zumindest teilweise in Eingriff sein. Die Nase 32 ist, vom Gegenstück 22 ausgehend, nach unten ausgerichtet, sie zeigt somit zu der abzudeckenden Führungsbahn hin.

Fig. 8 zeigt schematisch und im Querschnitt ein weiteres Gegenstück 22 mit einer Nase 32 und einen weiteren Hinterschnitt 21 mit einer Nut 33. Die Nut 33 ist auch hier entsprechend der Nase 32 gestaltet. Die Nase 32 und die Nut 33 können in der gestreckten Lage 23 der Gliederschürze 1 zumindest teilweise in Eingriff sein. Die Nase 32 zeigt, vom Gegenstück 22 ausgehend, zu einem benachbarten Glied 2 hin und ist in der Laufrichtung der Gliederschürze 1 ausgerichtet.

### Bezugszeichenliste

- 1: Gliederschürze
- 2: Glied
2a erstes Glied
2b zweites Glied
- 3: Gelenkverbindung
- 4: Oberseite
- 5: Unterseite
- 6: erste Stirnseite
- 7: zweite Stirnseite
- 8: erstes Gelenkteil
- 9: zweites Gelenkteil
- 10: rundförmige Nutaufnahme
- 11: Öffnung
- 12: rundförmige Feder
- 13: Gelenkachse
- 14: Schwenkbewegung
- 15: Halter
- 16: Halterzwischenraum
- 17: Halter-Abstand
- 18: Vorsprung
- 19: Vorsprungs-Abstand
- 20: Verstärkungselement
- 21: Hinterschnitt
- 22: Gegenstück
- 23: gestreckte Lage
- 24: geschlossene Oberfläche
- 25: Winkelbegrenzer
- 26: Abstreifer
- 27: Gliedlänge
- 28: Gliedschürzenbreite
- 29: Gliedschürzenlänge
- 30: seitliche Führungsgleiter
- 31: Hohlwelle
- 32: Nase
- 33: Nut
- R1: Innenradius
- R2: Außenradius
- D: Durchmesser

## Patentansprüche

1. Gliederschürze (1), insbesondere zum Schutz von Führungsbahnen, umfassend mindestens zwei Glieder (2) und mindestens eine diese verbindende Gelenkverbindung (3),
wobei jedes Glied (2) eine Oberseite (4), eine Unterseite (5), eine erste Stirnseite (6) und eine gegenüberliegende, zweite Stirnseite aufweist (7), und
wobei die Gelenkverbindung (3) ein erstes Gelenkteil (8) und ein zweites Gelenkteil (9) aufweist, wobei das erste Gelenkteil (8) im Bereich der ersten Stirnseite (6) und das zweite Gelenkteil (9) im Bereich der zweiten Stirnseite (7) angeordnet ist,
so dass das erste Gelenkteil (8) eines Gliedes (2) mit dem zweiten Gelenkteil (9) eines anderen Gliedes (2) im Eingriff steht, **dadurch gekennzeichnet, dass**
das erste Gelenkteil (8) im Querschnitt eine rundförmige Nutaufnahme (10) ausbildet und eine Öffnung (11) im Bereich der ersten Stirnseite (6) aufweist, und
das zweite Gelenkteil (9) eine rundförmige Feder (12) ausbildet, die im Querschnitt an die rundförmige Nutaufnahme (10) des ersten Gelenkteils (8) angepasst ist.

2. Gliederschürze nach Anspruch 1, wobei das erste Gelenkteil (8) und das zweite Gelenkteil (9) so relativ zueinander um eine Gelenkachse (13) verschwenkbar sind, dass die Gelenkteile (8, 9) durch eine Schwenkbewegung (14) um die Gelenkachse (13) lösbar verbindbar sind.

3. Gliederschürze nach Anspruch 1 oder 2, wobei mindestens ein Halter (15) an der Unterseite (5) wenigstens eines Gliedes (2) und von dieser weggerichtet angeordnet ist.

4. Gliederschürze nach Anspruch 3, wobei wenigstens ein Glied (2) mindestens einen Halterzwischenraum (16) an der Unterseite (5) aufweist, der jeweils mit zwei Haltern (15) begrenzt ist, die in einem Halter-Abstand (17) zueinander und an der Unterseite (5) und von dieser weggerichtet angeordnet sind, wobei sich die Halter (15) im Wesentlichen parallel zu den Stirnseiten (6, 7) erstrecken.

5. Gliederschürze nach Anspruch 4, wobei die Halter (15) zueinander gerichtete Vorsprünge (18) aufweisen, die in einem Vorsprungs-Abstand (19) zur Unterseite (5) angeordnet sind und insbesondere den Halterzwischenraum (16) zumindest teilweise begrenzen.

6. Gliederschürze nach Anspruch 4 oder 5, wobei mindestens ein Verstärkungselement (20) in dem Halterzwischenraum (16) wenigstens eines Gliedes (2) angeordnet ist.

7. Gliederschürze nach einem der Ansprüche 1 bis 6, mit mindestens einem ersten Glied (2a) und mindestens einem zweiten Glied (2b), wobei bei jedem ersten Glied (2a) mindestens ein Hinterschnitt (21) an der ersten Stirnseite (6) und der zweiten Stirnseite (7) ausgebildet ist und bei jedem zweiten Glied (2b) mindestens ein entsprechendes Gegenstück (22) an der ersten Stirnseite (6) und der zweiten Stirnseite (7) ausgebildet ist,
wobei der mindestens eine Hinterschnitt (21) und das mindestens eine Gegenstück (22) oberhalb der Gelenkteile (8, 9) angeordnet sind,
so dass der mindestens eine Hinterschnitt (21) und das mindestens eine Gegenstück (22) in einer gestreckten Lage (23) der Gliederschürze (1) in Eingriff gelangen und somit die Glieder (2a, 2b) eine zumindest teilweise geschlossenen Oberfläche (24) ausbilden.

8. Gliederschürze nach einem der Ansprüche 1 bis 6, wobei bei jedem Glied (2) mindestens ein Hinterschnitt (21) an der ersten Stirnseite (6) oder der zweiten Stirnseite (7) ausgebildet ist und mindestens ein entsprechendes Gegenstück (22) an der gegenüberliegenden zweiten Stirnseite (7) oder ersten Stirnseite (6) ausgebildet ist,
wobei der mindestens eine Hinterschnitt (21) und das mindestens eine Gegenstück (22) oberhalb der Gelenkteile (8, 9) angeordnet sind,
so dass der mindestens eine Hinterschnitt (21) und das mindestens eine Gegenstück (22) in einer gestreckten Lage (23) der Gliederschürze (1) in Eingriff gelangen und somit die Glieder (2) eine zumindest teilweise geschlossenen Oberfläche (24) ausbilden.

9. Gliederschürze nach Anspruch 7 oder 8, wobei das mindestens eine Gegenstück (22) wenigstens eine Nase (32) aufweist und der mindestens eine Hinterschnitt (21) wenigstens eine entsprechende Nut (33) aufweist, so dass die wenigstens eine Nase (32) und die wenigstens eine Nut (33) in der gestreckten Lage (23) der Gliederschürze (1) zumindest teilweise in Eingriff sind.

10. Gliederschürze (1), insbesondere zum Schutz von Führungsbahnen, umfassend mindestens ein erstes Glied (2a) und mindestens ein zweites Glied (2b) und mindestens eine diese verbindende Gelenkverbindung (3),
wobei jedes Glied (2a, 2b) eine Oberseite (4), eine Unterseite (5) und sich gegenüberliegende Stirnseiten (6, 7) aufweist, und
wobei die Gelenkverbindung (3) ein erstes Gelenkteil (8) und ein zweites Gelenkteil (9) aufweist, wobei jedes erste Glied (2a) jeweils das erste Gelenkteil (8) im Bereich der jeweiligen Stirnseite (6, 7) aufweist und jedes zweite Glied (2b) jeweils das zweite Gelenkteil (9) im Bereich der jeweiligen Stirnseite (6, 7) aufweist,
so dass das erste Gelenkteil (8) des ersten Gliedes (2a) mit dem zweiten Gelenkteil (9) des zweiten Gliedes (2b) im Eingriff steht,
**dadurch gekennzeichnet, dass**
das erste Gelenkteil (8) im Querschnitt eine rundförmige Nutaufnahme (10) ausbildet und eine Öffnung (11) im Bereich der jeweiligen Stirnseite (6, 7) aufweist, und
das zweite Gelenkteil (9) eine rundförmige Feder (12) ausbildet, die im Querschnitt an die rundförmige Nutaufnahme (10) des ersten Gelenkteils (8) angepasst ist.
